# EUROPEAN PATENT APPLICATION

(11) **EP 2 364 894 A1**
(43) Date of publication of application: **14.09.2011**
(21) Application number: 11000987.5
(22) Date of filing: 08.02.2011
(51) Int. Cl.: B62B 3/00, B62B 5/04

(54) **Wheel locking device applicable for trolleys for industrial uses**

(30) Priority: 09.02.2010 IT PN20100008
(71) Applicant: Leanproducts S.r.l., 33170 Pordenone (IT)
(72) Inventor: The designation of the inventor has not yet been filed
(74) Representative: Da Riva, Ermanno

(57) **Abstract**

improved locking device applicable preferably with trolleys (carts in the rest of claims)mainly for industrial uses, said device being constituted by a first bowden cable (C1) connected to the towing device (T), by a second bowden cable (C2) connected to the lever (L) placed on the handle bar (M) of the cart (C) that connects to a diverter (D) from which radiate two Bowden cables (C3) that connect to two lock elements (EB) which commands the piston (P) in them (EB) sliding and that engaging in the holes (F) of the wheels (R). In said locking device (B) the lever (L) commands manually the bowden cable (C2) in locking and unlocking the wheels (R) passing through the diverter (D) that will activate the pistons (P) of the locking element (EB), the towing device (T) also may, if lowered unlocked in upward position relock the cart placing in action bowden cable (C1) that, without interfering with the command given by the lever (L) by the diverter (D) act on the two lock elements (EB) motioning the piston (P) in them (EB) sliding through the bowden cables (C3).

## Description

The present invention has as object an improved active locking device applicable preferably to trolleys (carts in the prosecution of the description) used mainly in the industry field. This device, as it is applied preferably to a couple of non pivoting wheels, or slightly pivoting around their vertical axe, is provided with a double locking-release system composed by a simple braking device, available both in the towing device (eventually) and in the manual handling bar, typical of carts.

Many kinds of carts are known, for the industrial sector and other uses, provided with a locking-release system of the wheels, with the aim of positioning the cart and the material on the cart in a fixed and safe place. These carts are mainly provided with braking systems placed directly on their wheels and made up of a small lever, placed over the corresponding wheel. If this lever is pressed against the wheel, the friction creates the brake. This braking system, which is the most used in the carts for generic use, has some big disadvantages, mainly a high deterioration of the wheel in which it is installed. This deterioration normally also brings stability problems to the cart caused by the reduction of the wheel diameter, and many other problems known to the users of these carts.

Thereby the problems that can be met while dealing with conventional braking systems are well known, and we are not going to describe them here, as of common knowledge and a state of the art.

This device we're describing has the aim of putting a remedy to all of the above mentioned problems. This aim is reached by the improved locking device which is the object of this patent.

To better understand the intrinsic and peculiar characteristics of this improved braking system and to demonstrate the advantages that can be reached using this device, the description that follows is made with reference to annexed technical drawings. These drawings have the sole aim of exemplify the device and represent the suggested realization procedure and shape. In the drawing annexed:
Figure 1 represents a view of the sole device, with all the constitutive elements, and separated from the cart.
Figure 2 represents a perspective view of a chosen cart on which is installed the device in Figure 1.
Figure 3 is the perspective representation, seen from below, of the cart in Figure 2, with the device in

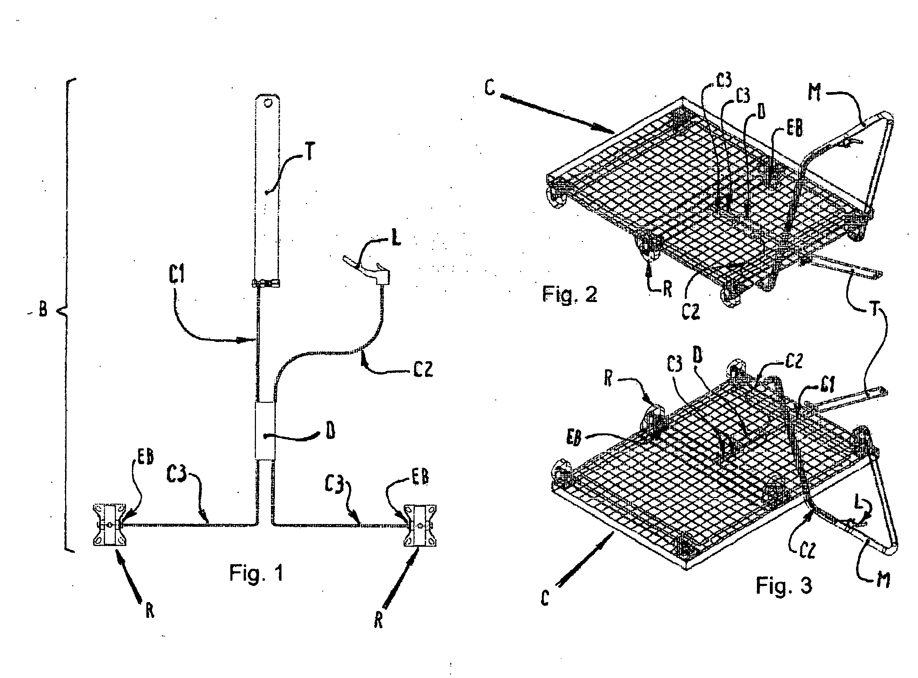

Figure 1 highlighted.

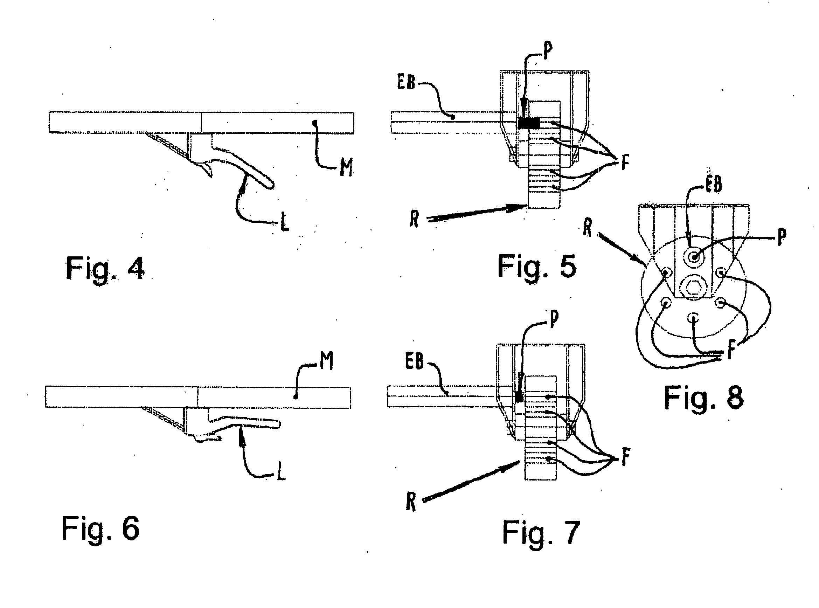

Figure 4 represents the drive leverof the device in Figure 1 in "work" position.
Figure 5 is a frontal view of one of the wheel of the cart in Figure 2, together with the locking element of the same wheel in "work" position.
Figure 6 is the drive lever of the device in Figure 1 in "rest" position.
Figure 7 is a frontal view of one of the wheels of the cart in Figure 2, together with the corresponding locking element of the same wheel in "rest" position.
Figure 8 is a side view of the wheel used to lock the cart, with highlighted the holes used for the locking function of the device in Figures 5 and 7.

From now on the common elements will be recalled with the same references.

With reference to Figure 1 we'll describe the locking device B in its construction configuration. There is a first bowden cable C1 which is connected to the towing device T and a second bowden cable C2 connected to the handle bar M. Both bowden cables C1 and C2 are introduced in the proper connection places, not described here, of the diverter D. From the opposite side of this diverter D, 2 more bowden cables will outflow, exactly the same in this case for dimension and length, which will be connected with some locking elements EB provided with small pistons P, in which are sliding and controlled by traction and release of the bowden cables in the way described below. It is pointed out that the locking elements EB are preferably placed and fixed in a known way on the wheels R support frame.

Summarily defined the construction and distributive scheme of the elements composing the braking system B in its whole, we'll go on describing how the locking device B is installed and made operational on the structure of the cart C of Figures 2 and 3, this with reference to the Figures 4,5,6,7 and 8, With reference to what exposed above, that is from Figure 2 to 8, Figures 5,7 and 8 excluded, it is possible to see how the bowden cable C1 is connected to the towing device T and runs, in a central position and below the cart C, to the diverter D, and parallel to the towing device T. At the same time the bowden cable C2 is connected to the lever L, applied to the handle bar M used for the manual handling of the cart C, and it runs (C2) through the handle bar M and then under the cart C to the second free connection of the diverter D, connected with the same (D) placed under the cart (C). From the diverter D, placed under the cart C, and specifically from its (D) two free connection points, opposite to those already engaged with the bowden cables C1 and C2, start the two bowden cables C3 that are going to be connected (passing under the cart) to the two locking elements EB, provided with a small piston P in the inside, that will be engaged or not engaged by the F holes of the R wheel when, operated by the locking element EB itself controlled by the bowden cables C1 and C2 through the diverter D and the bowden cables C3, the piston P will make it enter or exit from the holes F.

Having briefly described the manufacturing of the locking device B and its applying to the cart C, we now pass to the description of its functioning with reference to Figure 1-8 and in particular Figure 4,5,6,7 and 8. With reference to the above mentioned Figure, it's pointed out that the locking device B will be in "work" position, in other words it will not lock the wheels R, when the lever L, placed on the handle bar M, will be in the position in Figure 6. To this position will correspond the configuration of the locking element EB as shown in Figure 7, that is with the piston P retracted in its inside (of EB). To lock, that is to prevent the movement of the cart C, the position of the lever L will be the one in Figure 4, defined "work" position. To this "work" position correspond the configuration of the locking element EB illustrated in Figure 5, in which its (of EB) piston P will be engaged in the holes F done in the disc of the wheel R, as shown in Figure 8. Of course the lever L will operate on the bowden cable C2 which will lead the diverter D, which itself will call for the release or the engaging of the piston P of the locking element EB, on the wheel R.

Correspondingly to the lever L manual control placed on the handle bar M, there is a second control linked to the towing device T for mechanics handling. This second control is applied to the towing device T, and if the first command from the lever L is activated in "work" position, that is to say it locks the cart C, it will unlock the cart with the only action of lowering the towing device T. In this way the cart C can be handled by traction with pulling devices as forklifts etc. Once the cart C is placed in the desired position, the towing device T will raise automatically thanks to a recall spring, and it will lock again the cart C.

The locking and unlocking with the towing device T is possible thanks to the fact that the bowden cable C1, which is linked to the towing device T, will be controlled by the towing device R and will act to the diverter D which will unlock, when lowered (T), the wheels R engaged with the pistons P of the locking element EB. it's possible to see how the locking device B, as command and security of the cart C is provided with 2 cooperating "circuits" with the aim of locking and unlocking the cart C with different modes, that is to say, with the lever L in case of operator handling, called manual handling, or with the towing device T, that will unlock and relock the cart C, in case of pulling with forklifts etc.

We point out that the 2 "circuits" operate in a complementary and synergic mode, and in no case they interfere with each other thanks to the diverter D.

The lever L will be provided with a known locking device whith which it will be possible to stop it (L) in a traction position of the bowden cable, with the aim of keeping fixed and secure the unlocking of the wheels R of the cart C.

The carts can widely vary in their configuration and conformation, and in the number of wheels mounted. The wheels with the locking system B are called "fixed", that is to say they'll not be able to rotate on their vertical axe, as happened for other carts wheels. Of course, to allow the cart to rotate, we point out that the "fixed" wheels will be allowed to rotate to a fairly broad angle, in the framework described above.

It's clear that the realization of the device as described here is a preferred configuration and many variants can be applied to the locking device B, to the cart C and to their constitutive elements, not listed for shortness, without escaping from this patent, ad below claimed with reference to the annexed Figures and to the domain of the present invention.

Improved locking device applicable

## Claims

1. Improved locking device applicable preferably with trolleys mainly for industrial uses, said device being constituted by a first bowden cable (C1) connected to the towing device (T), by a second bowden cable (C2) connected to the lever (L) placed on the handle bar (M) of the cart (C) that connects to a diverter (D) from which radiate two Bowden cables (C3) that connect to two lock elements (EB) which commands the piston (P) in them (EB) sliding and that engaging in the holes (F) of the wheels (R) **characterized by** the fact that the lever (L) commands manually the bowden cable (C2) in locking and unlocking the wheels (R) passing through the diverter (D) that will activate the pistons (P) of the locking element (EB), the towing device (T) also may, if lowered unlocked in upward position relock the cart placing in action bowden cable (C1) that, without interfering with the command given by the lever (L) by the diverter (D) act on the two lock elements (EB) motioning the piston (P) in them (EB) sliding through the bowden cables (C3).

2. Device as claim 1 **characterized by** the fact that the wheels (R) provided with holes (F) will be rated around their vertical axis by an angle fairly broad.
